# EUROPEAN PATENT SPECIFICATION

(11) **EP 1 297 887 B1**
(45) Date of publication and mention of the grant of the patent: **27.06.2007**
(21) Application number: 02021705.5
(22) Date of filing: 24.09.2002
(51) Int. Cl.: B01D 53/94, B01J 23/44, B01J 23/58, B01J 37/02

(54) **Exhaust gas purifying catalyst and exhaust gas purifying system**
Abgasreinigungskatalysator und -system
Système et catalyseur pour la purification des gaz d'échappement

(30) Priority: 26.09.2001 JP 2001292979
(43) Date of publication of application: 02.04.2003
(73) Proprietor: Mazda Motor Corporation, Aki-gun, Hiroshima 730-8670 (JP)
(72) Inventor: Miyoshi, Seiji, Aki-gun, Hiroshima 730-8670 (JP); Takami, Akihide, Aki-gun, Hiroshima 730-8670 (JP); Yamada, Hiroshi, Aki-gun, Hiroshima 730-8670 (JP); Okamoto, Kenji, Aki-gun, Hiroshima 730-8670 (JP)
(74) Representative: Müller-Boré & Partner Patentanwälte

(56) References cited:
- EP-A- 0 908 225
- WO-A-99/56859
- US-A- 5 874 057
- PATENT ABSTRACTS OF JAPAN vol. 1995, no. 07, 31 August 1995 (1995-08-31) & JP 07 108172 A (TOYOTA MOTOR CORP), 25 April 1995 (1995-04-25)

## Description

The present invention relates to an exhaust gas purifying catalyst and an exhaust gas purifying system using the exhaust gas purifying catalyst.

There have been widely known three-way catalysts that performs oxidization of HC and CO and reduction of NOx simultaneously. Such a three-way catalyst often comprises an active metal such a noble metal as Pd, Pt and Rh, a support material such as alumina that functions to stabilize the active metal and, as a result, to increase a surface area of the active metal coming into contact with exhaust gases so as thereby to improve the catalytic conversion efficiency thereof, and an oxygen storage material such as ceria (a supplemental catalyst). The three-way catalyst shows poor catalytic performance at low exhaust gas temperature and causes significant aggravation of NOx conversion efficiency at lean air-fuel ratios.

One of catalysts of the type containing an HC adsorption material and a NOx adsorption material is disclosed in Japanese Unexamined Patent Publication No. 2001-113173. This catalyst stores HC and NOx in an exhaust gas during cold engine operation immediately after an engine start and releases and converts the adsorbed HC and NOx after activation of a catalytic metal. The catalyst comprises an inner catalytic layer of HC adsorption material that contains zeolite on a surface of a substrate and an outer catalytic layer of catalytic metal that contains a noble metal such as Pd and a NOx adsorption material such as Ba. The NOx adsorption material is selected from a group of alkaline metals and alkaline earth metals. The catalyst contains the NOx adsorption material between 60/40 and 99/1 in weight ratio.

Another catalyst of the type containing an HC adsorption material and a NOx adsorption material is disclosed in Japanese Unexamined Patent Publication No. 11-13462. This catalyst comprises an inner catalytic layer of HC adsorption material that contains zeolite on a surface of a substrate and one or two outer catalytic layers of catalytic metal each of which contains a noble metal such as Pd and is impregnated with a solution of barium nitrate.

As disclosed, for example, in Japanese Unexamined Patent Publication No. 9-79026, it has been known to dispose a NOx adsorption material and an HC adsorption material coated on a single substrate together with a three-way catalyst in an exhaust line.

The investigation of peculiarities of this type of catalysts that was conducted by the inventors of the present application showed that, although Pd in the catalyst inherently had catalytic activity on HC at comparatively low temperatures, there were cases where the low temperature catalytic performance of Pd was lowered depending on the catalytic composition when the catalyst was exposed to a high temperature exhaust gas. It was found that these cases appeared in the catalyst that contained an alkaline metal or an alkaline earth metal as the NOx adsorption material. It was also found that the more the low temperature activity of Pd was deteriorated more as the amount of NOx adsorption material increased.

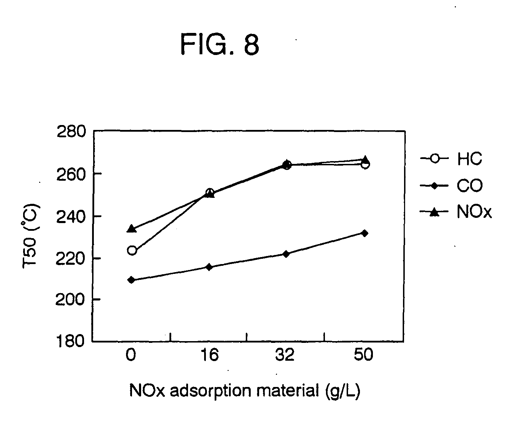

Figure 8 shows light off temperatures (T50) regarding HC, CO and NOx conversion for various comparative catalysts containing different amounts of NOx adsorption material after aging. The comparative catalyst comprises two catalytic layers, namely an inner catalytic layer coated on a substrate and an outer catalytic layer coated over the inner catalytic layer. The inner catalytic layer has a catalytic component consisting of Ag and Bi supported on β-type zeolite. The outer catalytic layer has a catalytic component consisting of Pt, Rh and Pd supported on alumina and ceria. The measurement of light off temperature was made on four comparative catalysts having outer catalytic layers that contain no NOx adsorption material, 16g/L of NOx adsorption material (10g/L of Ba; 3g/L of Sr and 3g/L of Mg), 32g/L of NOx adsorption material (20g/L of Ba; 6g/L of Sr and 6g/L of Mg) and 50g/L of NOx adsorption material (30g/L of Ba; 10g/L of Sr and 10g/L of Mg), respectively. Each comparative catalyst was aged at 80°C for 24 hours in the atmosphere.

As demonstrated in Figure 8, each of HC, CO and NOx shows a rise in light off temperature that becomes greater as the amount of NOx adsorption material increases. In particular, each of HC and CO shows a prominent tendency to rise the light off temperature.

WO-A-99/56859 discloses a catalyst member which comprises a refractory carrier, an adsorbent layer disposed on the carrier and comprising an adsorbent material for adsorbing hydrocarbons, a permeable barrier layer disposed over the adsorbent layer, and a permeable catalytic layer disposed over the adsorbent layer. EP-A-0 908 225 describes a catalyst containing a precious metal and a further substance having an electron donatability and/or a nitrogen dioxide absorbability and releasability.

It is therefore an object of the invention to provide an exhaust gas purifying catalyst containing both Pd and NOx adsorption material that prevents Pd from causing aggravation in low temperature HC purification performance when the exhaust gas purifying catalyst is exposed to a high temperature exhaust gas.

It is another object of the invention to provide an exhaust gas purifying catalyst containing both Pd and NOx adsorption material that prevents Pd from causing aggravation of its low temperature activity more as the NOx adsorption material is increased in amount.

The present invention was accomplished on the basis of the revelation that the functional aggravation of an exhaust gas purifying catalyst containing both Pd and a NOx adsorption material as an alkaline metal or an alkaline earth metal is prevented by isolating Pd from the NOx adsorption material in the exhaust gas purifying catalyst.

According to the present invention, the exhaust gas purifying catalyst contains at least a metal, selected from a group of alkaline metals and alkaline earth metals; and Pd, such that the Pd is partly isolated from the metal so as to be not affected by said metal electrically nor chemically. Specifically, the exhaust gas purifying catalyst comprises an outer catalytic layer containing a metal and an inner catalytic layer containing Pd. These Pd and metal are prevented from electrical and chemical interaction with each other, so that the isolated Pd is prevented from causing aggravation in low temperature activity.

The exhaust gas purifying catalyst further comprises an innermost layer of zeolite that is operative to adsorb HC in an exhaust gas while the exhaust gas purifying catalyst remains low in temperature and to release the adsorbed HC into the exhaust gas when the exhaust gas purifying catalyst raises its temperature. The zeolite adsorbs HC in an exhaust gas while the exhaust gas purifying catalyst is at a low temperature, so that HC is prevented from emitting into the atmosphere is prevented. Since the metal, an alkaline metal or an alkaline earth metal, does not affect the low temperature activity of Pd, HC released from the zeolite catalytic layer is reliably oxidized, and so purified, by Pd.

It has been known in the art that, although Pd is advantageous to the low temperature HC conversion, it is easy to cause thermal deterioration and to be poisoned with lead and sulfur. Contradistinctively, the exhaust gas purifying catalyst of the present invention in which the inner catalytic layer containing Pd is covered by the outer catalytic layer containing the metal, so that the outer catalytic layer functions as a functional barrier, preventing the Pd from thermal deterioration and lead and sulfur poisoning. Therefore, on this account, the low temperature activity of the exhaust gas purifying catalyst is ensured.

The exhaust gas purifying catalyst may preferably contain the metal more than 15g per one liter of a substrate on which the exhaust gas purifying catalyst is formed. Even though the exhaust gas purifying catalyst contains a large amount of the metal, an alkaline metal or an alkaline earth metal, the exhaust gas purifying catalyst prevents the Pd from lowering its lower temperature activity. In the case where an alkaline metal or an alkaline earth metal is employed as a NOx adsorption material, it is preferred for the exhaust gas purifying catalyst to contain the metal 30g, but less than 59g, per one liter of the substrate.

According to another aspect of the present invention, an exhaust gas purifying system comprises the above catalyst that is disposed in the exhaust line, and temperature control means for raising a temperature of the catalyst so as thereby to cause the NOx adsorption material to release the adsorbed SOx into the exhaust gas. In the catalyst, the Pd is partly isolated from the NOx adsorption material so as to be not affected by said NOx adsorption material electrically nor chemically.

The catalyst containing a NOx adsorption material encounters the problem of sulfur poisoning that refers to a loss of the NOx adsorption function due to a salt formed in the form of an oxide of sulfur resulting from adsorption of sulfur in an exhaust gas. In the event of an occurrence of this problem, although the oxide of sulfur can be released from the NOx adsorption material by raising the catalytic temperature, for example to 400°C, the NOx adsorption material encourages the Pd in deteriorating its low temperature activity at a so high catalytic temperature, so as to cause the Pd to aggravate its low temperature activity significantly.

Contradistinctively, since the catalyst used in the exhaust gas purifying system of the present invention in which the Pd is at least partly isolated from the NOx adsorption material so as to be not affected by the NOx adsorption material electrically nor chemically, the Pd is prevented from being encouraged in deteriorating its low temperature activity by the NOx adsorption material when the catalytic temperature is raised. The raise in exhaust gas temperature may be performed by making an air-fuel ratio rich, by retarding an ignition timing or a fuel injection timing, or by supplying a secondary gas into an exhaust gas stream so as to assist oxidative reaction of HC and CO with a result of providing an increase in reaction heat.

The above and other objects and features of the present invention will be understood from the following description of a specific embodiment thereof when considering in conjunction with the accompanying drawings, in which:
Figure 1 is a schematic view of an engine equipped with an exhaust gas purifying system of the present invention;
Figure 2 is a cross-sectional view of an exhaust gas purifying catalyst according to an embodiment of the present invention;
Figure 3 is graphic representation showing HC absorption ratios, HC oxidation ratios, total HC conversion ratio and NOx conversion ratio of the exhaust gas purifying catalyst shown in Figure 2 before and after aging;
Figure 4 is a cross-sectional view of a comparative exhaust gas purifying catalyst;
Figure 5 is graphic representation showing HC absorption ratios, HC oxidation ratios, total HC conversion ratio and NOx conversion ratio of the exhaust gas purifying catalysts shown in Figures 2 and 4 after aging;
Figure 6 is graphic representation showing the relationship between inlet temperature and HC conversion ratio of the exhaust gas purifying catalysts shown in Figures 2 and 4 after aging;
Figure 7 is a flowchart illustrating a sequence routine of fuel injection control; and
Figure 8 is graphic representation showing the relationship between light off temperature and amount of NOx adsorption material of an exhaust gas purifying catalyst after aging for HC, CO and NOx.

The term "light off temperature (T50)" as used herein shall mean and refer to an inlet gas temperature at which the conversion efficiency of a catalyst amounts to 50%. Further, the term "exhaust gas of an air-fuel ratio (A/F) of X" as used herein shall mean and refer to an exhaust gas produced resulting from combustion of an air-fuel mixture of an air-fuel ratio (A/F) ofX.

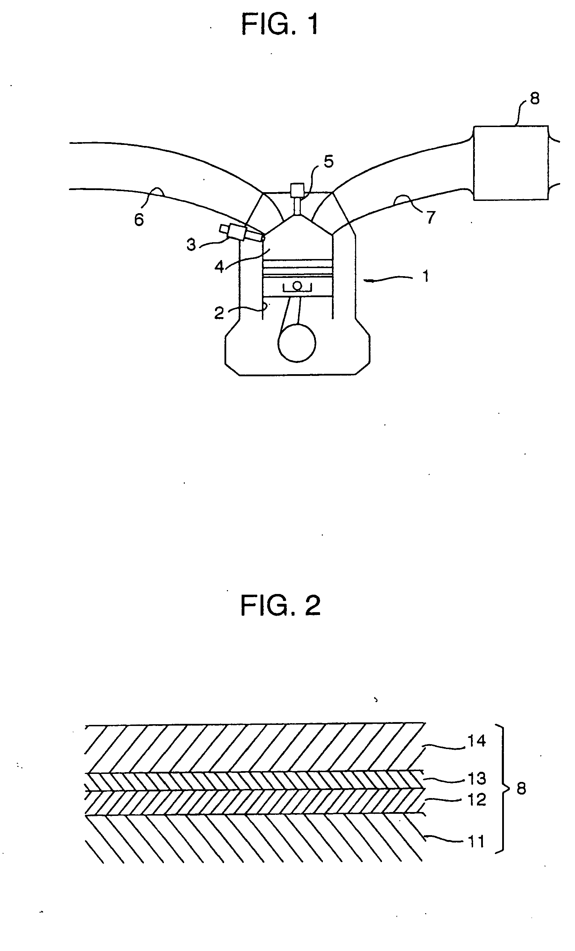

Referring to the drawings in detail and, in particular, to Figure 1 schematically showing an engine 1 equipped with an exhaust gas purifying system of the present invention, the engine 1, that is of a spark-ignition type, comprises a plurality of cylinders 2 (only one of which is shown) in each of which a combustion chamber 4 is formed, a fuel injector 3 operative to spray fuel directly into the combustion chamber 4, a spark plug 5. Air is introduced into the engine through an intake passage 6 and an exhaust gas is discharged from the engine 1 through an exhaust passage 7 equipped with an exhaust gas purifying catalyst 8 therein.

Figure 2 shows a cross-section of the exhaust gas purifying catalyst 8. As shown, the exhaust gas purifying catalyst 8 comprises a substrate 11 such as a cordierite honeycomb bed, an inner catalytic layer 12 coated on the substrate 11, an intermediate catalytic layer 13 laid over the inner catalytic layer 12 and an outer catalytic layer 14 laid over the intermediate catalytic layer 13. The inner catalytic layer 12 contains Ag and Bi in addition to zeolite, and a binder. The intermediate catalytic layer 13 contains a catalytic component that comprises Pd supported on alumina and ceria, and a binder. The outer catalytic layer 14 comprises a catalytic component that contains Pt, Rh, Ba, Sr and Mg supported on alumina and ceria, and a binder. The zeolite of the exhaust gas purifying catalyst 8, that functions as an HC absorption material, is of a β-type having a salic ratio of 300.

The catalytic component comprising Pt and Rh supported on alumina such as γ-alumina powder and ceria functions as a three-way catalyst. Ba, Sr and Mg in the exhaust gas purifying catalyst 8 adsorb NOx in an exhaust gas when the exhaust gas has an oxygen concentration higher than, for example, 4% that is represented by an air-fuel ratio greater than 16 and release the adsorbed NOx into the exhaust gas when the exhaust gas lowers the oxygen concentration below, for example, 2%. The alumina is used in the powder form. As the ceria, that indicates oxides containing a ceria component and functions as an oxygen storage material, one of Ce·Pr composite oxides (Ce_{0.9} Pr_{0.1}O₂) is employed in this embodiment. In order to put a restraint on thermal deterioration of the alumina, a small amount, for example 5%, of La is added into the alumina powder. As the binder of each of the inner catalytic layer 12 and the intermediate catalytic layer 13, an alumina binder is employed. On the other hand, as the binder of the outer catalytic layer 14, a basic binder such as zirconia binder. Seen in that sense, the exhaust gas purifying catalyst 8 can be called a lean NOx adsorption catalyst having an HC trapping function.

A sample exhaust gas purifying catalyst 8 was produced in the following process. First of all, catalytic powder A and B were prepared. The catalytic powder A was made up by mixing active alumina powder, ceria, palladium nitrate and water all together and calcinating the mixture at 500°C after drying. The catalytic powder B was made up by mixing active alumina powder, ceria, barium acetate, strontium acetate, magnesium acetate, dinitro-diamine platinum nitrate, rhodium nitrate and water all together, and calcinating the mixture at 500°C after drying.

The inner catalytic layer 12 was formed by coating a given amount of a slurry of a mixture of zeolite, hydrated alumina (alumina binder). The mixture slurry was prepared by mixing zeolite and hydrated alumina with water and stirring the mixture. The honeycomb substrate 11 was dipped into and drawn out from the mixture slurry so as to form a slurry layer, and then the slurry layer was exposed to air blows so as to remove an excessive part of the mixture slurry. This process was repeated until a layer consisting of the given amount of the mixture slurry is formed. The eventual layer was finished by calcinations at 500°C after drying. The intermediate catalytic layer 13 was formed over the inner catalytic layer 12 in the same process as the inner catalytic layer 12 using the catalytic powder A in place of zeolite. The inner and intermediate catalytic layers 12 and 13 were impregnated with a mixed solution of silver nitrate and bismuth acetate and then calcinated at 500°C after drying. Thereafter, the outer catalytic layer 14 was formed over the intermediate catalytic layer 13 in the same process as the inner catalytic layer 12 using the catalytic powder B and a zirconia binder in place of zeolite and an alumina binder, respectively.

The exhaust gas purifying catalyst 8 was adjusted so as to have the following quantitative formula:

| | |
|---|---|
| Inner catalytic layer 12 | β-type zeolite: 100g/L |
| Intermediate catalytic layer 13 | Pd: 2.0g/L; Alumina: 30g/L; Ceria: 10g/L |
| Outer catalytic layer 14 | Pt: 3.5g/L; Rh: 0.3g/L; Ba: 30g/L; Sr: 10g/L; |
| | Mg: 10g/L; Alumina: 100g/L; Ceria: 100g/L |
| Impregnated constituent | Ag: 10g/L Bi: 0.5g/L |

The inner and outer catalytic layers 12 and 14 were adjusted so that the inner catalytic layer 12 contains a total amount of Ba, Sr and Mg less than 1% of the total amount of those of the outer catalytic layer 14. Each of the respective catalytic layers 12, 13 and 14 contained impurities less than 1%.

A rig test was carried out in order to evaluate catalytic performance -HC purification efficiency (HC adsorption ratio, HC oxidation ratio and HC conversion efficiency) and lean NOx purification efficiency- of the sample exhaust gas purifying catalyst 8 before and after aging. The aging of the sample exhaust gas purifying catalyst 8 was made in the atmosphere at 800°C for 24 hours. The evaluation of HC purification efficiency was performed in the test mode consisting of raising the inlet gas temperature of an N₂ gas streaming at a spatial velocity of 25000h⁻¹ in which the sample exhaust gas purifying catalyst 8 was disposed to 80°C (first step); supplying HC, NO and O₂ gases into the stream of N₂ gas for two minutes keeping the inlet gas temperature so that the HC, NO and O₂ contents amount to 1500ppmC, 100ppmC and 1.0%, respectively, (second step); and subsequently raising the inlet gas temperature from 80°C to 400°C at a rate of 30°C/min. after interrupting the supply of HC gas (third step). The N₂ gas was streamed at a spatial velocity of 25000h⁻¹.

HC adsorption ratio was determined on the basis of inlet and outlet HC concentrations of the N₂ gas stream for the period of two minutes during the second step. The HC oxidation ratio, that is the ratio of oxidized HC relative to adsorbed HC, was determined on the basis of an adsorbed amount of HC in the sample exhaust gas purifying catalyst 8 for the period of two minutes during the second step and the outlet HC concentration during the third step. The HC conversion efficiency was defined by the product of HC adsorption ratio and HC oxidation ratio. The lean NOx purification efficiency was defined as a NOx conversion efficiency for a period of 60 seconds from a point of time at which a simulated exhaust gas is changed over in gas composition to a specific gas composition A after repeating exposure of the sample exhaust gas purifying catalyst 8 to a simulated exhaust gas having the gas composition A for a period of 60 seconds and subsequently to a simulated exhaust gas having a specific gas composition B for a period of 60 seconds five times. The simulated exhaust gas was maintained at 35°C and streamed at a spatial velocity of 25000h⁻¹. The table I shows the gas composition A for a simulated exhaust gas of a lean air-fuel ratio (A/F) of 22 and the gas composition B for a simulated exhaust gas of a rich air-fuel ratio (A/F) of 14.5.

**TABLE I**

| | Gas composition A | Gas composition B |
|---|---|---|
| | Lean (A/F = 22) | Rich (A/F = 14.5) |
| HC(C₃H₆) | 1333ppm | 1333ppm |
| NO | 260ppm | 260ppm |
| CO | 0.16% | 0.16% |
| CO₂ | 9.75% | 9.75% |
| H₂ | 650ppm | 650ppm |
| O₂ | 7% | 0.5% |
| N₂ | Remainder | Remainder |

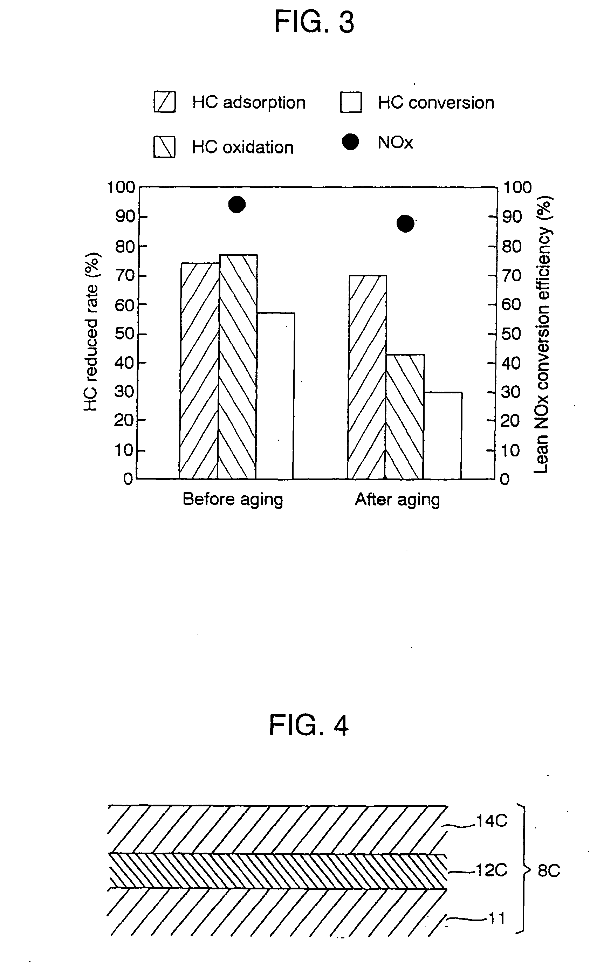

The evaluation result is shown in Figure 3. As demonstrated in Figure 3, the HC oxidation ratio shows a deterioration due to aging but not so large. This event will be described in detail later in connection with a rig test of a comparative exhaust gas purifying catalyst. On the other hand, the HC adsorption ratio shows deterioration a little due to aging. The lean NOx purification efficiency shows deterioration a little due to aging. The fact that deterioration of the HC absorption ratio is quite a little indicates that the β-type zeolite in the inner catalytic layer 12 causes almost no functional defect due to aging. This event proves that the β-type zeolite causes almost no decrease in specific surface area.

Bi impregnated in the intermediate catalytic layer 13, that exists an accessible atom to a Pd atom, prevents Pd from reacting on Ag and thereby producing a Pd-Ag alloy, in other words, prevents Pd from causing a deterioration in low temperature activity on HC conversion or prevents a decrease in the amount of Ag that effectively functions in the improvement of HC absorption performance.

Figure 4 shows a comparative exhaust gas purifying catalyst 8C that comprises an inner catalytic layer 12C coated on a substrate 11 such as a cordierite honeycomb bed and an outer catalytic layer 14C directly laid over the inner catalytic layer 12C. The inner catalytic layer 12C is identical in constituent with and formed in the same process as the inner catalytic layer 12 of the sample exhaust gas purifying catalyst 8. The outer catalytic layer 14C comprises a catalytic component that contains Pt, Rh, Pd, Ba, Sr and Mg supported on alumina and ceria, and a binder. That is, the comparative exhaust gas purifying catalyst 8C is different from the sample exhaust gas purifying catalyst 8 in that no intermediate catalytic layer is formed between the inner and outer catalytic layers 12C and 14C, but is there Pd additionally contained in the outer catalytic layer 14C.

The comparative exhaust gas purifying catalyst 8C was produced in the following process. In the first place, catalytic powder C was prepared. The catalytic powder C was made up by mixing active alumina powder, ceria, barium acetate, strontium acetate, magnesium acetate, dinitro-diamine platinum nitrate, rhodium nitrate, palladium nitrate and water all together and calcinating the mixture at 500°C after drying.

The inner catalytic layer 12C was formed in the same process as that of the sample exhaust gas purifying catalyst 8. The inner catalytic layer 12C was subsequently impregnated with a mixed solution of silver nitrate and bismuth acetate and then calcinated at 500°C after drying. Thereafter, the outer catalytic layer 14C was formed over the inner catalytic layer 12C in the same process as that of the sample exhaust gas purifying catalyst 8.

The exhaust gas purifying catalyst 8C was adjusted so as to have the following quantitative formula:

| | |
|---|---|
| Inner catalytic layer 12C | β-type zeolite: 100g/L |
| Outer catalytic layer 14C | Pt: 3.5g/L; Rh: 0.3g/L; Pd: 2.0g/L; Ba: 30g/L; |
| | Sr: 10g/L; Mg: 10g/L; Mg: 10g/L; Alumina: |
| | 100g/L; Ceria: 100g/L |
| Impregnated constituent | Ag: 10g/L Bi: 0.5g/L |

The inner and outer catalytic layers 12C and 14C were adjusted so that the inner catalytic layer 12C contains a total amount of Ba, Sr and Mg less than 1% of the total amount of those of the outer catalytic layer 14. Each of the respective catalytic layers 12C and 14C contained impurities less than 1%.

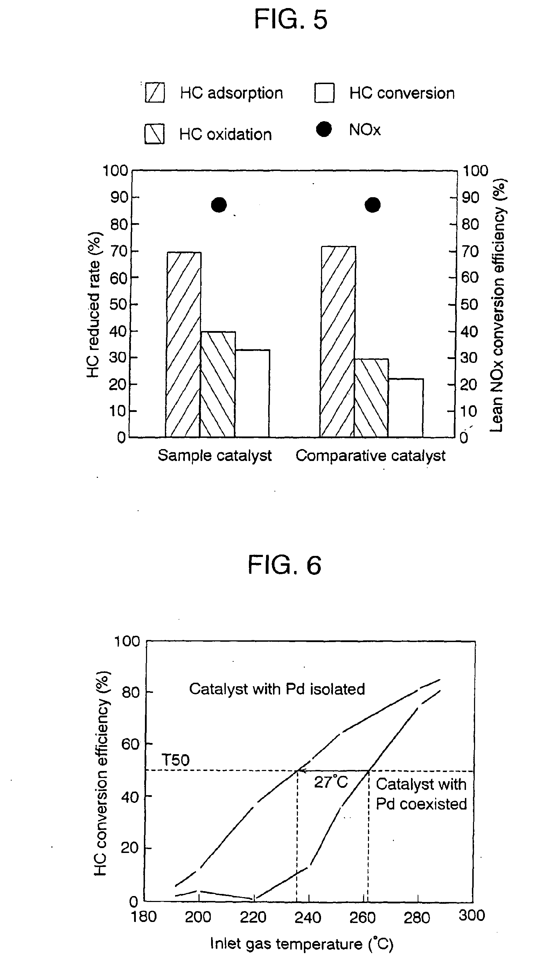

A rig test was carried out in order to make comparative evaluations of the catalytic performance -HC purification efficiency and lean NOx purification efficiency- between the sample and comparative exhaust gas purifying catalysts 8 and 8C after aging in the same test mode as described in connection with the evaluation rig test of the sample exhaust gas purifying catalyst 8. The evaluation result is shown in Figure 5.

As demonstrated in Figure 5, there is almost no difference in the lean NOx conversion efficiency between the sample and comparative exhaust gas purifying catalysts 8 and 8C. The sample exhaust gas purifying catalyst 8 shows an HC adsorption ratio lower than the comparative exhaust gas purifying catalyst 8C and, however, an HC oxidation ratio higher than the comparative exhaust gas purifying catalyst 8C. As a whole, the sample exhaust gas purifying catalyst 8 has an HC conversion ratio higher than the comparative exhaust gas purifying catalyst 8C.

It is conceivable that the high HC oxidation ratio of the sample exhaust gas purifying catalyst 8 is due to the conformation of Pd in the intermediate catalytic layer 13 isolated from Ba, Sr and Mg functioning as NOx adsorption elements in the outer catalytic layer 14. That is, because Pd is higher in low temperature activity on HC conversion due to oxidation, the HC oxidation ratio is greatly influenced by how the Pd is active. As for the sample exhaust gas purifying catalyst 8, the Pd in the intermediate catalytic layer 13 is hardly affected electrically and chemically by the NOx adsorption elements, so that the Pd does not cause a significant deterioration in the low temperature activity due to aging. That is, it is conceived that the NOx adsorption elements do not encourage the Pd in deteriorating its low temperature activity.

Rig tests were carried out to measure HC conversion ratios of the sample and comparative exhaust gas purifying catalysts 8 and 8C in order to evaluate light off temperatures (T50) regarding HC conversion. Measurements of HC conversion ratio were made on each catalyst after aging as the inlet gas temperature was gradually raised. Aging of the catalyst was performed in the same condition as previously described. A simulated exhaust gas that was used in the rig test was of an air-fuel ratio (A/F) of 14.7 ± 0.9. That is, while a main simulated exhaust gas of an air-fuel ratio (A/F) of 14.7 was stationarily streamed at a spatial velocity of 25000h⁻¹, a specified amount of modifying gas was spouted into the stationary main exhaust gas stream on a cycle of 1Hz so as to force the air-fuel ratio to pulsate between 14.7 ± 0.9.

The table II shows the gas composition of the main simulated exhaust gas of an air-fuel ratio (A/F) of 14.7.

**TABLE II**

| CO₂ | O₂ | CO | H₂ | C₃H₆(HC) | NO | N₂ |
|---|---|---|---|---|---|---|
| 13.9% | 0.6% | 0.6% | 0.2% | 0.056% | 0.1% | Remainder |

A gas of O₂ was employed for the modifying gas in order to force the air-fuel ratio to vary to a lean side to 15.6. On the other hand, a mixture gas of H₂ and CO was employed for the modifying gas in order to force the air-fuel ratio to vary to a rich side to 13.8.

The evaluation result is shown in Figure 6. As demonstrated in Figure 6, the sample exhaust gas purifying catalyst 8 in which Pd is isolated from Ba, Sr and Mg is superior in low temperature activity to the comparative exhaust gas purifying catalyst 8C in which Pd coexists with Ba, Sr and Mg. Further, the sample exhaust gas purifying catalyst 8 is improved in light off temperature (T50) by approximately 27°C as compared with the comparative exhaust gas purifying catalyst 8C. This event proves that the isolation of Pd from a NOx adsorption material is advantageous to preventing an exhaust gas purifying catalyst from causing a deterioration of low temperature activity.

The exhaust gas purifying catalyst according to the embodiment of the present invention contains a NOx adsorption material such as Ba and adsorbs NOx in exhaust gases while an air-fuel ratio remains lean. Accordingly, when there is an increase in the amount of adsorbed NOx, it is necessary to cause reduction purification of NOx by means of making an air-fuel ratio rich, i.e. by means of lowering an oxygen concentration of exhaust gas, so as to release the adsorbed NOx. In addition, when the amount of NOx adsorption material poisoned with sulfur becomes large, it is necessary to revitalize the exhaust gas purifying catalyst by means of raising a catalytic temperature.

The following description will be directed to fuel injection control for NOx release and revitalization of sulfur poisoned catalyst. In the fuel injection control, an air-fuel ratio is made rich in order to cause a rise in catalytic temperature.

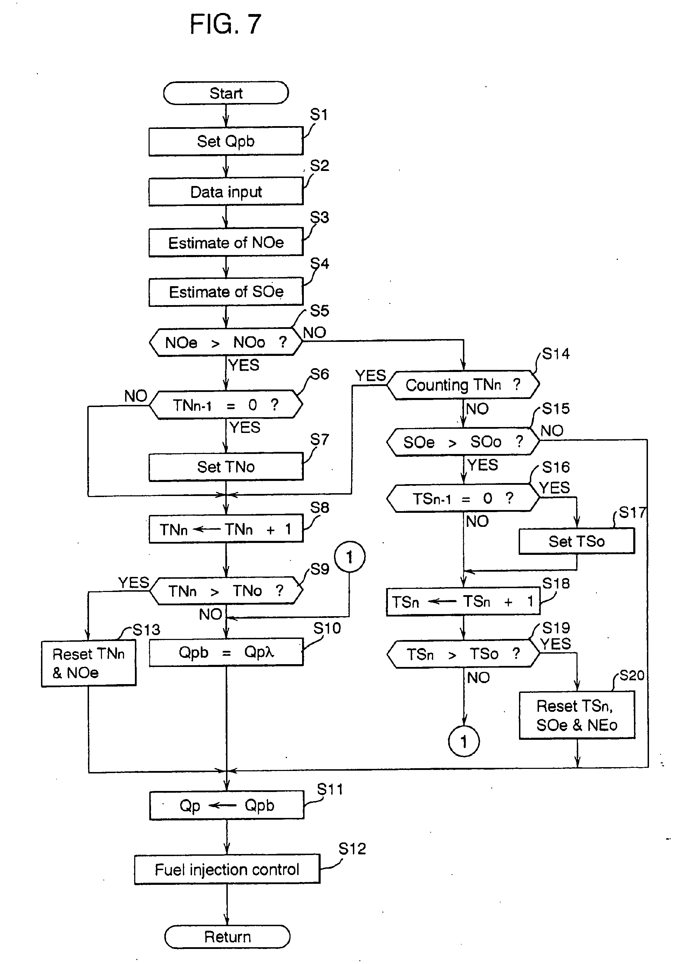

Figure 7 shows a flowchart illustrating a sequence routine of the fuel injection control. When the sequence logic commences and control proceeds to a function block at step S 1 where various data are input. The data includes at least an amount of intake air, an engine speed, an accelerator position or engine load and a catalytic temperature. After determining a basic amount of fuel injection Qpb that meets a target air-fuel ratio determined on the basis of the data according to an engine operating condition at step S2, an amount of NOx adsorption NOe and an amount of SOx (oxides of sulfur) adsorption are estimated as integrated values at steps S3 and S4, respectively. In this instance, when the air-fuel ratio remains lean, i.e. an excess air ratio λ is greater than 1, this estimate is performed with respect to an engine operating condition (engine speeds and engine loads) by reference to a map that defines amounts of NOx or SOx adsorption according to engine operating conditions by way of experiment. On the other hand, when the air-fuel ratio remains rich, i.e. an excess air ratio λ is equal to or less than 1, the estimate is performed by gradually reducing the integrated amount of NOx or SOx adsorption by a diminution constant that is changed larger as the excess air ratio λ becomes lower and as an interval for which the air-fuel ratio remains rich becomes longer.

Thereafter, a determination is made at step S5 as to whether the estimated amount of NOx adsorption NOe is larger than a predetermined threshold amount of NOx adsorption NOo. The threshold amount of NOx adsorption NOo refers to an amount of NOx adsorption that is conceived to be as large as the exhaust gas purifying catalyst 8 involves NOx release control, in other words, the catalyst lowers its NOx adsorptive power. When the estimated amount of NOx adsorption NOe is larger than the predetermined threshold amount of NOx adsorption NOo, this indicates that the sulfur poisoning of NOx adsorption material is as serious as the exhaust gas purifying catalyst 8 needs to be revitalized, then, another determination is made at step S6 as to whether the last attribute TNₙ₋₁ that a counter shows is zero. The attribute TN represents a period of time for which the fuel injection control keeps up control of increasing the amount of fuel injection. When the last attribute TNₙ₋₁ is zero, after establishing a threshold time TNo at step S7, after establishing a threshold time TSo at step S7, the current attribute TNₙ is changed by an increment of one at step S8. On the other hand, when the last attribute TNₙ₋₁ is not zero, the current attribute TNₙ is changed by an increment of one at step S8 without establishing a threshold time TNo. In this instance, the threshold time TNo is set to an appropriate value, for example between 0.5 and 5 seconds in actual time, according to the current attribute TNₙ. Specifically, the threshold time TNo is small while the catalytic temperature is in a range, for example, between 200 and 400°C where NOx is easily released and is, on the other hand, large when the catalytic temperature is out of that temperature range.

Subsequently to changing the current attribute TNₙ by an increment of one at step S8, a determination is made at step S9 as to whether the current attribute TNₙ is larger than the threshold time TNo. When the current attribute TNₙ is equal to or smaller than the threshold time TNo, the basic amount of fuel injection Qpb is replaced with an amount of fuel injection Qpλ for enrichment at step S10. Thereafter, after substituting the basic amount of fuel injection Qpb (i.e. Qpλ) for an actual amount of fuel injection Qp at step S11, fuel injection is controlled so as to spray the actual amount of fuel injection Qp at step S12. On the other hand, when the current attribute TNₙ is larger than the threshold time TNo at step S9, after resetting the attribute TNₙ and the estimated amount of NOx adsorption NOe at step S13, the basic amount of fuel injection Qpb is substituted for an actual amount of fuel injection Qp at step S11 and then, fuel injection is controlled so as to spray the actual amount of fuel injection Qp at step S12.

On the other hand, when the estimated amount of NOx adsorption NOe is equal to or smaller than the predetermined threshold amount of NOx adsorption NOo, this indicates that the sulfur poisoning of NOx adsorption material is not serious, then, another determination is made at step S14 as to whether the counter is still counting, i.e. whether it is still in the process of the control of increasing control of increasing the amount of fuel injection. When it is still in the process of the fuel increasing control, then, the sequence logic jumps to the control of releasing NOx through steps S8 to S12. On the other hand, when it is out of the process of the fuel increasing control, then, a determination is made at step S 15 as to whether the estimated amount of SOx adsorption SOe is larger than a predetermined threshold amount of SOx adsorption SOo. The threshold amount of SOx adsorption SOo refers to an amount of SOx adsorption that is conceived to be poisoned with SOx as large as the exhaust gas purifying catalyst 8 involves SOx release control. When the estimated amount of SOx adsorption SOe is still below the predetermined threshold amount of SOx adsorption SOo, fuel injection is performed so as to splay the basic amount of fuel Qpb through steps S11 and S12.

On the other hand, when the estimated amount of SOx adsorption SOe is above the predetermined threshold amount of SOx adsorption SOo at step S15, another determination is made at step S 16 as to whether the last attribute TSₙ₋₁, that a counter shows is zero. The attribute TS represents a period of time for which the fuel injection control keeps up control of increasing the amount of fuel injection. When the last attribute TSₙ₋₁ is zero, after establishing a threshold time TSo at step S 17, the current attribute TNₙ is changed by an increment of one at step S 18. On the other hand, when the last attribute TSₙ₋₁ is not zero, the current attribute TSₙ is changed by an increment of one at step S18 without establishing a threshold time TSo. In this instance, the threshold time TSo is set to an appropriate value in a range between, for example, 1 and 10 minutes in actual time according to a current catalytic temperature while the catalytic temperature is higher than a specific temperature of, for example, 400°C. Specifically, the threshold time TSo is made as the catalytic temperature becomes higher.

Subsequently, a determination is made at step S19 as to whether the current attribute TNₙ is larger than the threshold time TSo. When the current attribute TSₙ is equal to or smaller than the threshold time TSo, the sequence logic jumps to the function at step S 10 so as to replace the basic amount of fuel injection Qpb with an amount of fuel injection Qpλ for enrichment. Thereafter, after substituting the basic amount of fuel injection Qpb (i.e. Qpλ) for an actual amount of fuel injection Qp at step S11, fuel injection is controlled so as to spray the actual amount of fuel injection Qp at step S12. On the other hand, when the current attribute TSₙ is larger than the threshold time TSo at step S19, after resetting the attribute TSₙ the estimated amount of NOx adsorption NOe and the estimated amount of SOx adsorption SOe at step S20, the basic amount of fuel injection Qpb is substituted for an actual amount of fuel injection Qp at step S11 and then, fuel injection is controlled so as to spray the actual amount of fuel injection Qp at step S12.

As described above, when the amounts of adsorbed NOx and adsorbed SOx increase, the air-fuel ratio is made rich by increasing the amount of fuel injection even while the engine is operated with a lean air-fuel ratio, so as to lower the oxygen concentration of exhaust gas. As a result, the exhaust gas purifying catalyst 8 releases NOx from the NOx adsorption material and then reduces the NOx with the catalytic novel metals in the outer catalytic layer 14 thereof. Further, when the exhaust gas purifying catalyst 8 is poisoned with sulfur to a significantly increased degree, the air-fuel ratio is made rich by increasing the amount of fuel injection even while the engine is operated with a lean air-fuel ratio. As a result, since, while the exhaust gas raises its temperature, the exhaust gas purifying catalyst 8 is made active in oxidation reaction, the exhaust gas purifying catalyst 8 raises its own temperature, resulting in releasing SOx from the NOx adsorption material. This leads to revitalization of the NOx adsorption material.

When the NOx adsorption material is seriously poisoned with sulfur, the exhaust gas temperature may be raised by retarding an ignition timing in addition to making an air-fuel ratio rich. Further, the catalytic temperature may be further raised by supplying secondary air into an exhaust gas stream upstream from the exhaust gas purifying catalyst 8 so as to assist the exhaust gas purifying catalyst 8 in causing oxidative reaction.

## Claims

1. An exhaust gas purifying catalyst (8) containing at least a metal selected from a group of alkaline metals and alkaline earth metals, Pd, and zeolite operative to absorb HC in an exhaust gas while said exhaust gas purifying catalyst (8) remains low in temperature and to release HC into said exhaust gas when said exhaust gas purifying catalyst (8) raises its temperature, **characterized in that**:
said metal, Pd and zeolite are separately contained in different layers, respectively;
wherein said layer containing said zeolite (12) is formed on a substrate of the exhaust gas purifying catalyst, and the remaining layers (13, 14) are formed on said layer containing zeolite so that said layer containing metal (14) is disposed outside said layer containing Pd (13).

2. The exhaust gas purifying catalyst (8) as defined in claim 1, **characterized in** the said zeolite containing layer (12) contains β-type zeolite, said metal containing layer (14) contains at least one metal selected from Ba, Mg and Sr, and, optionally, Pt, Rh, alumina and ceria, and said Pd containing layer (13) contains alumina and ceria.

3. The exhaust gas purifying catalyst (8) as defined in claim 1 or 2, **characterized in that** each of said zeolite containing layer (12) and said Pd containing layer (13) contains Bi.

4. An exhaust gas purifying device comprising the catalyst (8) as defined in any-one of claims 1 to 3, said catalyst being disposed in an exhaust passage of an engine, and temperature control means for controlling said catalyst (8) to raise its temperature so as thereby to desorb said sulfur from said NOx adsorption material.

## Patentansprüche

1. Abgasreinigungskatalysator (8), enthaltend mindestens ein Metall, ausgewählt aus einer Gruppe von Alkalimetallen und Erdalkalimetallen, Pd und Zeolith, der betriebsfähig ist, HC in einem Abgas zu absorbieren, während der Abgasreinigungskatalysator (8) niedrig in der Temperatur verbleibt, und HC in das Abgas freisetzt, wenn der Abgasreinigungskatalysator (8) in seiner Temperatur steigt, **dadurch gekennzeichnet, daß**:
das Metall, Pd bzw. Zeolith getrennt in verschiedenen Schichten enthalten sind,
wobei die Schicht, die den Zeolith (12) enthält, auf einem Substrat des Abgasreinigungskatalysators gebildet ist, und die verbleibenden Schichten (13, 14) auf der Schicht, enthaltend Zeolith, derart gebildet sind, daß die Schicht, enthaltend Metall (14), außen an der Schicht, enthaltend Pd (13), angeordnet ist.

2. Abgasreinigungskatalysator (8), wie in Anspruch 1 definiert, **dadurch gekennzeichnet, daß** die Zeolith-enthaltende Schicht (12) Zeolith vom β-Typ enthält, die Metall-enthaltende Schicht (14) mindestens ein Metall, ausgewählt aus Ba, Mg und Sr und gegebenenfalls Pt, Rh, Aluminiumoxid und Ceroxid enthält, und die Pd-enthaltende Schicht (13) Aluminiumoxid und Ceroxid enthält.

3. Abgasreinigungskatalysator (8), wie in Anspruch 1 oder 2 definiert, **dadurch gekennzeichnet, daß** jede der Zeolith-enthaltenden Schicht (12) und Pdenthaltenden Schicht (13) Bi enthält.

4. Abgasreinigungsvorrichtung, umfassend den Katalysator (8), wie in einem der Ansprüche 1 bis 3 definiert, wobei der Katalysator in einer Abgasleitung eines Motors angeordnet ist, und Temperaturkontrollmittel zum Kontrollieren des Katalysators (8), um dessen Temperatur derart anzuheben, daß der Schwefel von dem NOx-Adsorptionsmaterial desorbiert wird.

## Revendications

1. Catalyseur (8) pour la purification de gaz d'échappement contenant au moins un métal sélectionné parmi le groupe des métaux alcalins et des métaux alcalino-terreux, Pd, et une zéolite apte à absorber HC dans un gaz d'échappement lorsque ledit catalyseur (8) pour la purification de gaz d'échappement reste bas en température et à relâcher HC dans ledit gaz d'échappement lorsque ledit catalyseur (8) pour la purification de gaz d'échappement élève sa température, **caractérisé en ce que**:
lesdits métal, Pd et zéolite sont contenus séparément, respectivement dans différentes couches;
dans lequel ladite couche contenant ladite zéolite (12) est formée sur un substrat du catalyseur pour la purification de gaz d'échappement, et les couches restantes (13,14) sont formées sur ladite couche contenant la zéolite de sorte que ladite couche contenant le métal (14) est disposée du côté extérieur de ladite couche contenant Pd (13).

2. Catalyseur (8) pour la purification de gaz d'échappement tel que défini dans la revendication 1, **caractérisé en ce que** ladite couche contenant la zéolite (12) contient une zéolite de type β, ladite couche contenant le métal (14) contient au moins un métal sélectionné parmi Ba, Mg et Sr, et optionnellement, Pt, Rh, de l'alumine et de l'oxyde de cérium, et ladite couche contenant Pd (13) contient de l'alumine et de l'oxyde de cérium.

3. Catalyseur (8) pour la purification de gaz d'échappement tel que défini dans la revendication 1 ou 2, **caractérisé en ce que** chacune des dites couche contenant la zéolite (12) et couche contenant Pd (13) contient Bi.

4. Dispositif pour la purification de gaz d'échappement comprenant le catalyseur (8) tel que défini dans une quelconque des revendications 1 à 3, ledit catalyseur étant disposé dans le conduit de sortie d'un moteur, et des moyens de contrôle de température pour contrôler la montée en température dudit catalyseur (8) pour ainsi désorber ledit sulfure dudit matériau d'adsorption des NOx.
